# EUROPEAN PATENT SPECIFICATION

(11) **EP 2 124 039 B1**
(45) Date of publication and mention of the grant of the patent: **23.04.2014**
(21) Application number: 08425369.9
(22) Date of filing: 22.05.2008
(51) Int. Cl.: G01N 21/03, G01N 21/05, G01N 21/64

(54) **Biochip for detection of analytes in a biological sample**
Biochip für den Nachweis von Analyten in einer biologischen Probe
Biopuce pour la détection d'analytes dans un échantillon biologique

(43) Date of publication of application: 25.11.2009
(73) Proprietor: Centro Ricerche Plast-Optica S.p.A., 33020 Amaro (UD) (IT)
(72) Inventor: Melpignano, Patrizia, 33020 Amaro (Udine) (IT); Biondo, Viviana, 33020 Amaro (Udine) (IT); Sinesi, Sabino, 33020 Amaro (Udine) (IT)
(74) Representative: Gallarotti, Franco

(56) References cited:
- WO-A-2005/103652
- WO-A-2007/054710
- US-A1- 2005 221 281
- O. HOFMANN ET AL.: "Towards microalbuminuria determination on a disposable diagnostic microchip with integrated fluorescence detection based on thin-film organic light emitting diodes." LAB ON A CHIP, vol. 5, 2005, pages 863-868, XP002500963
- DE ROOIJ N F ET AL: "Microfluidics meets MEMS" PROCEEDINGS OF THE IEEE, IEEE. NEW YORK, US, vol. 91, no. 6, 1 June 2003 (2003-06-01), pages 930-953, XP011097417 ISSN: 0018-9219
- R. M. GUIJT ET AL.: "Chemical and physical processes for integrated temperature control in microfluidic devices." LAB ON A CHIP, vol. 3, 2003, pages 1-4, XP002500964

## Description

### Field of the invention

The present invention concerns a device for the detection of at least one analyte in a biological sample. In particular, the device according to the present invention is a miniaturized device comprising in a single structure a light source and a microfluidic system designed to contain the sample to be analysed, where said device is designed for ultrarapid biomolecular diagnostics for the detection of molecules of nucleic acid or protein molecules within the sample.

### Technological background of the invention

Miniaturized devices for the detection of analytes in biological samples comprising a light source and a system designed to contain the sample are known in the art.

The international patent application No. WO-A-2005/103652 describes, for example, a miniaturized device that comprises a light source constituted by an OLED (Organic Light-Emitting Diode) system, diffraction filters for directing the light emitted by the light source to the sample and further diffraction layers necessary for directing the light emitted by the sample to the detector system. The device described in the application No. WO-A-2005/103652 envisages that the wavelengths of the light emitted by the light source will be selected in order to transmit to the sample only the wavelengths of interest for exciting the sample, where said selection is made through the creation of vertical cavities within the OLED layer.

Another device of the known art is described in the international patent application No. WO-A-2007/097572, which envisages, in addition to a light source constituted by a LED (Light-Emitting Diode) system, the presence of a layer of material designed to form a stable bond with the sample to be analysed directly applied on the light source. Said layer is basically constituted by a surface functionalized by means of appropriate linker molecules designed to fix the analyte molecules in a stable way. The wavelengths of the light emitted by the light source are controlled using a system known as *quantum dot.*

Another miniaturized device for the detection of an analyte in a biological sample is described in the international patent application No. WO-A-03/060461, which describes in extremely general terms a device comprising a light source, a first system of filters for transmission of the light to the sample and a detector system capable of detecting the light emitted by the sample, where the light emitted by the sample is directed to the detector system through a second system of filters.

Again, the international patent application No. WO-A-2007/054710 describes a device comprising an OLED source for the emission of the light necessary for exciting the sample contained in a microfluidic system and a detector system set in direct contact with the microfluidic system. The device described therein envisages that the microchannels constituting the microfluidic system will be constituted by polydimethyl siloxane doped with appropriate staining agents, which have the function of absorbing the wavelengths of light emitted by the OLED source that could interfere with the analysis of the sample and which are thus able to transmit to the sample only the wavelengths of light useful for conducting the analysis.

Described in the U.S. patent application No. US-A-2003/035755 is a device that has a light source of an OLED type, positioned on which is a microfluidic device designed to contain the sample to be analysed and in succession a layer of lenses for focusing the light emitted by the sample, a layer defined "pinhole layer" and a further filter followed by the detector system. The layer of lenses, the pinhole layer, and the additional filter are components designed to focus and filter the light emitted by the sample to be analysed for eliminating the wavelengths that could interfere with the analysis.

By way of example, we may again cite the international patent application No. WO-A-2007/107947, which describes a microelectronic device for detection of an analyte in a sample characterized by the presence of heating electrodes and field electrodes. The latter have the function of inducing the movement/flow of the sample within the device. The heating electrodes are designed for heating the sample and can be coupled to Peltier cells for carrying out thermal cycles of heating and cooling for conducting the analysis of interest.

### Summary of the invention

Even though miniaturized devices for the detection of an analyte in a biological sample have already been described and are available on the market, there continues to be felt the need to develop devices that will enable increasingly sensitive and specific analyses to be conducted by non-specialized operators, i.e., ones not belonging to laboratories of analysis, but by doctors at the so-called "point of care", where the analysis must be carried out in real time, in the presence of the patient.

The object of the present invention is to provide an improved device that will enable analyses of this sort to be conducted in optimized conditions of reaction in order to increase the sensitivity and specificity of the analysis, as well as to reduce the times for conducting the analysis itself. In particular, the object of the present invention is to develop a miniaturized device that will enable execution of the analysis by carrying out cycles of heating and cooling of the sample in such a way as to increase the sensitivity, specificity, and speed of the analysis.

Said purpose is achieved thanks to the device having the characteristics set forth in the ensuing claims. The claims form part an integral of the technical teaching provided herein.

The device according to the present invention comprises a transparent substrate, applied on the outer surfaces of which is a thin film of transparent conductive material. Applied on the first (bottom) surface, in direct contact with the film of conductive material, is a light source, constituted preferably by an OLED system. Present on the second (top) surface of the substrate, in direct contact with the film of conductive material, is a microfluidic system constituted by microchannels, inserted within which is the sample to be analysed, where said microchannels enable heating and cooling of the sample, and the film of conductive material is prearranged for coupling to cooling systems.

Of particular importance amongst the various advantages of the device forming the subject of the present invention is the possibility of carrying out cycles of heating and cooling of the sample thanks to the presence of a film of conductive material, which is set in direct contact with the microfluidic system and has a low thermal resistance, said cycles enabling - by operating jointly - heating and cooling of the sample to be analysed.

The analyte to be detected can be constituted both by molecules of nucleic acids (for example, genes or parts thereof) and by protein molecules (for example, antigens or antibodies).

### Detailed description of the invention

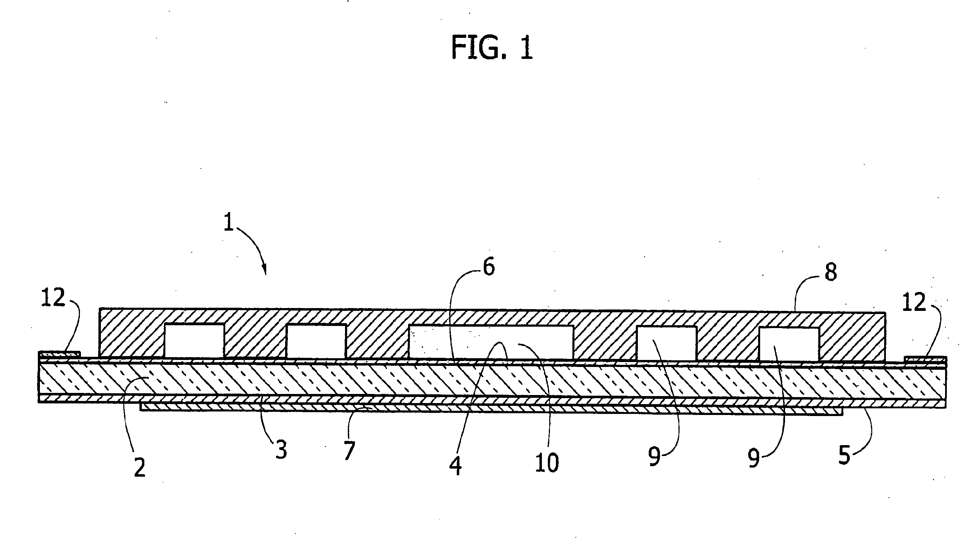

In what follows, a detailed description of the invention will be provided in relation to some preferred embodiments and with reference to the annexed drawings, wherein:
- Figure 1 is a vertical cross section of an embodiment of the device for conducting the analysis according to the present invention;

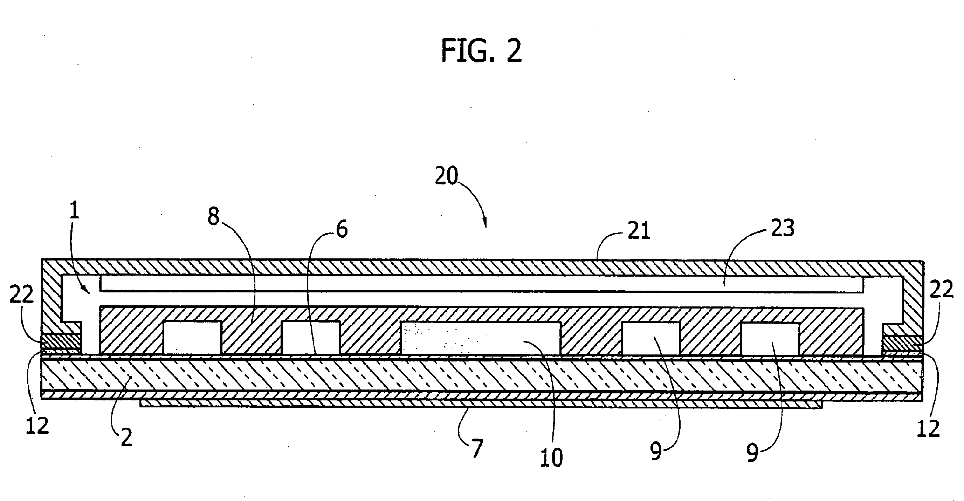

- Figure 2 shows the coupling of an embodiment of the device for conducting the analysis to a detector device; and

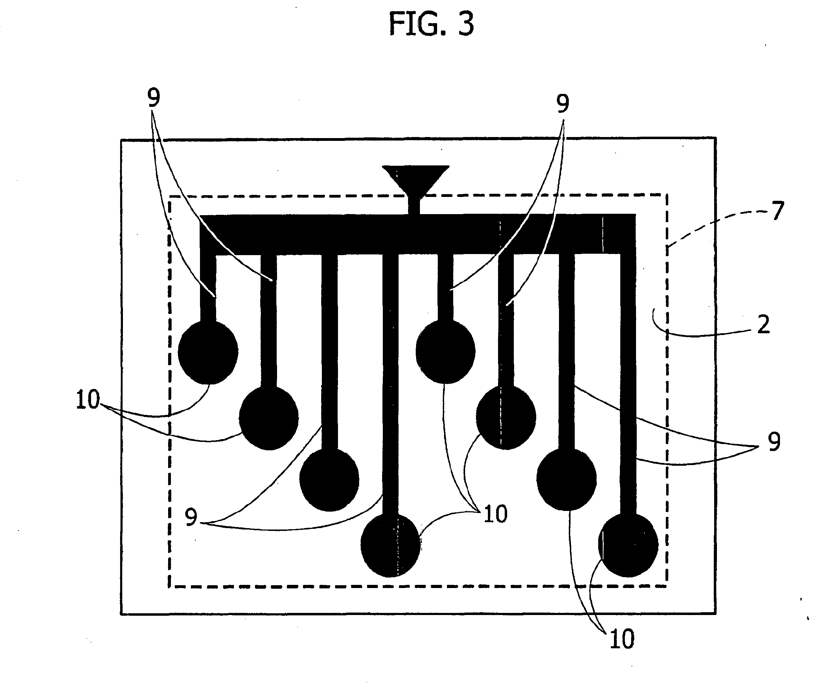

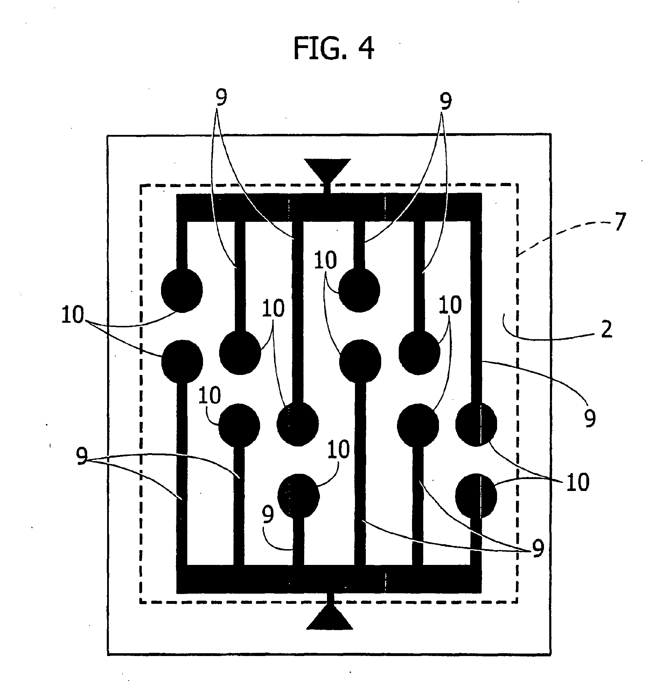

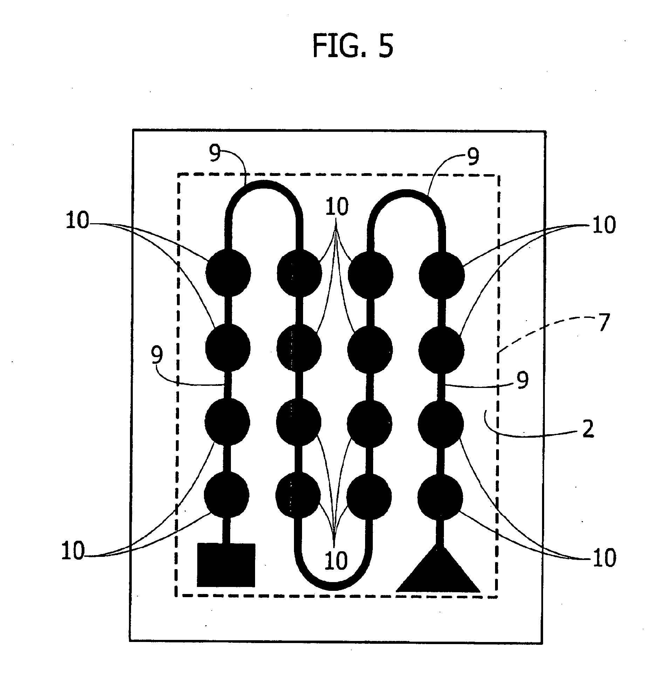

- Figures 3 to 5 show a plan view of different embodiments of the device for conducting the analysis according to the present invention.
   With reference to Figure 1, in a preferred embodiment of the device 1 for conducting the analysis (in what follows referred to, for reasons of brevity, as "biochip") comprises: a transparent substrate 2 having on its two opposite surfaces 3, 4 a first film of transparent conductive material 5 and a second film of transparent conductive material 6; an optical source 7 in direct contact with the first film of transparent conductive material 5; and a microfluidic system 8, designed to contain the sample to be analysed and the markers for detection of the analyte of interest in direct contact with the second film of transparent conductive material 6.
   In a preferred embodiment of the biochip according to the present invention, the optical source 7 is obtained by means of "organic thin film on transparent substrate" technology, also known as OLED (Organic Light-Emitting Diode) technology. This source is able to emit a light radiation with an emission peak that is fixed but can be selected between any wavelength in order to induce emissions of radiation in an appropriate fluorescent or phosphorescent marker used for detecting the analyte of interest in a specific way. The analyte can be constituted by i) a molecule of nucleic acid, and in this case the marker is constituted by a nucleic-acid probe bound to a fluorescent or phosphorescent molecule capable of emitting a fluorescent or phosphorescent radiation, or else ii) a protein molecule, and in this case the marker is constituted, for example, by a specific antibody for said molecule bound to a fluorescent or phosphorescent molecule capable of emitting a fluorescent or phosphorescent radiation. The optical source is able to emit a peak wavelength such as to correspond to the maximum of the spectrum of absorption of the markers. The intensity of emission of the source must, in fact, be such as to enable excitation of the marker and must hence be particularly high. To obtain this objective, the OLED system is made in such a way as to obtain an effect of internal microcavities which are designed to bring about a spectral narrowing of the light emitted, i.e., designed to transmit the light emitted only in the desired range of wavelengths.
   The thin films 5 and 6 of transparent conductive material are advantageously constituted by indium-tin oxide, zinc oxide and similar transparent and conductive oxides or else gold, silver, or their alloys.
   The microfluidic system 8 is preferably constituted by a series of microchannels 9 defined by metal walls with low thermal resistance. The microfluidic circuit is constituted by a series of channels arranged in comb-like fashion and separated from one another, or else by a single channel shaped like a coil.
   In the first case, the microfluidic system can envisage or not the presence of expansion chambers 10 at the end of the individual channels arranged in comb-like fashion, deposited within which are the markers useful for conducting the analysis on the sample.
   In the second case, where the single-channel microfluidic circuit 8 has a coiled shape, the expansion chambers 10 can be present in succession along the channel itself and can contain the markers for the analysis.
   The sections of the microfluidic channels 9 are such as to guarantee a laminar and non-turbulent flow of the liquid injected (for example, the sample).
   The presence of the film of conductive material 6 coupled to the microfluidic system 8 having low thermal resistance enables improvement of the conditions of reaction for recognition of the analyte, i.e., an increase in the sensitivity and specificity of the reaction of recognition and abbreviation of the times for conducting the analysis.
   The detector device 20, which does not form the subject of the present invention, comprises a system for detection 23 of the light signal emitted by the sample, a cooling system 22, represented, for example, by Peltier cells, which has the capacity of coupling, in pre-set positions, to the layer of transparent conductive material 6 coupled to the microfluidic system 8 of the biochip 1 in order to carry out cycles of heating and cooling of the biochip, as well as a system for the electronic management of the functions of processing of the light signal detected and of the cycles of heating and cooling of the biochip.
   In what follows, a description will be provided of the operations performed by the biochip according to the present invention in relation to the detection of molecules of nucleic acid within a sample. It is obvious that this represents just one of the possible applications of the biochip according to the present invention.
   The biochip according to the present invention envisages conducting the following operations for detection of molecules of nucleic acid by exploiting the polymerase chain reaction (PCR) and using fluorescent markers.
- Rapid thermocyclation - Said operation is useful for enabling in short times the polymerase chain reaction necessary for detecting molecules of nucleic acid (for example, DNA). It is, in fact, known that at approximately 94°C the double-strand molecule of DNA can be opened, enabling access to the amplification primers and to the possible fluorescent probe. By reducing the temperature to between 55-65°C hybridization of the primers and possibly of the probe with the DNA of interest is enabled. When the temperature is then brought to 72°C the polymerases enzyme is allowed to proceed with the synthesis of a copy of the molecule of DNA to be analysed. A reaction of amplification requires approximately 30-40 cycles of heating and cooling.
- Analyses of the amplification cycles - After each amplification cycle, the DNA is quantified by means of excitation of the fluorescent probes and detection of the fluorescence emitted thereby. In a typical reaction, the PCR product is doubled at each amplification cycle. Since the number of DNA molecules in the sample to be analysed is too small to be detected, a high number of amplification cycles is necessary to reach an effectively detectable quantity of DNA molecules, the diagram of the fluorescence as a function of the number of cycles consequently exhibits an initially increasing pattern that tends to present a saturation effect after a certain number of cycles. In the final cycles, in fact, the products of amplification no longer double, and the fluorescence curve reaches a plateau. Computer tools that are able to read the fluorescence curve emitted by the fluorescent probes enable calculation of the quantity of DNA molecules initially present in the sample.
- Standardization of the steps of hybridization and detection - The real-time quantification of PCRs based upon a standard straight line uses control samples (or reaction standards) constituted, for example, by DNA the absolute concentration of which is known. It is thus indispensable for the efficiency of the polymerization chain reaction to be the same for control samples and samples to be analysed. These aspects are widely known in the sector of genetic diagnostics and do not require any further description herein.
   Provided in what follows is a detailed description of the biochip 1 and of the detector device.
   In a preferred embodiment according to the present invention, the biochip 1 is formed by the components described below.
- A transparent substrate 2 made of glass or plastic with a high temperature of vitreous transition Tg of the thickness of approximately 1 mm.
- Deposited on both of the surfaces 3 and 4 of the substrate 2 is a thin film of transparent conductive material 5, 6, which preferably has an electrical resistivity lower than 10 Ω.m and a transmittance higher than 85% in the visible spectral range. Said material is advantageously constituted by indium-tin oxide or zinc oxide or by a thin film of gold, silver, or alloys thereof.
- Present on the first surface 3 of the substrate 2, in direct contact with the thin film of transparent conductive material 5, is an optical source 7 constituted by an OLED. Deposited by sublimation in a high vacuum is an organic multilayer constituted by a succession of five or more thin films of small organic molecules constituting the OLED. The thickness of the organic layers and of the material constituting the anode deposited is calculated to obtain effects of vertical microcavities such as to enable a spectral width to be obtained that is half the height of the radiation emitted, equal to 20-30 nm around the peak wavelength necessary. Said reduction of the spectral width of the light emitted is indispensable for preventing a non-negligible amount of light from possibly being emitted in the same spectral region of emission of the fluorescence of the markers and hence from possibly rendering the analysis imprecise. The OLED is made using, in the emitting layer, preferably electrophosphorescent materials inserted in organic matrices or in matrices comprising diphosphate-based molecules.
- The optical source 7 is protected from atmospheric agents thanks to the presence of a protection system (not illustrated) that seals the optical source.
- Obtained by thermal evaporation or by electrolytic growth on the second surface 4 of the substrate 2, i.e., on the face from which the radiation exits, in direct contact with the thin film of transparent conductive material 6, is a series of metal strips (not visible in the drawings) constituting the walls of the microfluidic channels 9 designed to contain the sample. The walls of said channels are preferably constituted by aluminium, silver, platinum, gold or other metals characterized by a low thermal resistance. The width of the microchannels 9 can range from a minimum of 10 µm to a maximum of 1 mm and their height from a minimum of 1-2 µm to a maximum of 100 µm. The microfluidic channels 9 are made with a comblike shape or with a coiled path. In the first case, at the terminal end of each channel expansion chambers 10 are created, preferably with circular cross section, in which the markers are deposited, in this case the DNA probes necessary for detection of the analyte, i.e., of the DNA of interest.
   Deposited within the channels 9 is a hydrophilic or hydrophobic material constituted by a thin film of polymer having a thickness of a few hundreds of nanometres, preferably siloxane-based, having the purpose of improving the flow of the biological sample within the microchannels 9 and hence enable a uniform distribution thereof. A further layer of organic material can be deposited within the expansion chambers 10 designed to favour adhesion of markers to the surface of the expansion chambers 10 themselves. The microchannels 9 are then sealed using a transparent photolithographic resist, possibly by means of a process of anionic heating.
   Rapid thermocyclation can be performed by means of thermal contact with a cooling system 22, represented, for example, by Peltier cells, in different regions of the surface of the second metallic film 6 in contact with the microfluidic system 8.
   For this purpose, the second film of conductive material 6 is provided with metal pads 12 on its free surface, which enable creation of thermal contacts with the cooling system present on the detector device. Said metal pads 12 are preferably localized along the external perimeter of the second film of conductive material 6 and are preferably three or four in number. The raising and lowering of the temperature to reach the pre-defined values is governed by the Peltier cells, which enable raising or lowering of the temperature within the microfluidic system 8 and, in particular, within the expansion chambers 10, where the reaction of detection of the analyte takes place. It is in fact known that, by increasing the temperature of the reaction environment, an increase of the kinetics of the reaction of analyte-marker coupling is obtained.
   The final dimensions of the biochip 1 for analysis range between 2 x 4 cm² and 3 x 7 cm². The dimensions of the area illuminated range between 1 x 1 cm² and 1.5 x 1.5 cm².
   The detector device 20 is constituted by the components described below.
- Applied in a base structure 21 are Peltier cells 22 that may come into contact each time with the different biochips to be analysed. The control of the temperature reached in the different areas of the surface is obtained by means of the contact with thermocouples (the metal pads 12) in predefined points of the front surface of thin metallic film 6 of the biochip 1 itself or by means of infrared CCDs. A CCD or CMOS matrix 23 stably fixed on the detector device 20 enables detection of the signal emitted by the markers. The CCD matrix preferably has a square shape with a side of a size ranging between 1 and 2 cm and is made with pixels of dimensions ranging between 10 µm and 100 µm. The distance between the CCD matrix and the biochip can range between 1 mm and 5 mm.
- An interferential filter (not illustrated) with a passband in the region of 30-40 nm centred on the peak wavelength of emission of the markers present in the biochip is provided in direct contact on the CCD matrix 23 in order to detect the radiation emitted by the sample, which is in turn excited by the underlying optical source 7. The interferential filter can be made on a "free standing" substrate and be set in front of the active area of the CCD matrix or else may be made directly on the surface of the CCD matrix. In the latter case, fabrication takes place by means of deposition in a vacuum of alternating layers of transparent inorganic materials with high indices of refraction (higher than 1.8) and low indices of refraction (lower than 1.4).
- An appropriate miniaturized electronics is integrated within the device and has the function of controlling the cycle of thermocyclation and detection of the optical signal and subsequent processing of the data detected in order to provide results of the analysis that will be intelligible for a doctor. The device is obviously equipped with a software for the association of the spots illuminated with particular genes present in the matrix. Moreover implemented within the software are calibration curves for the association of the intensity of fluorescence to the quantity of analyte present in the sample.
- A display for setting the parameters of the analysis and displaying the results obtained will be associated to the detector device.

The detector device is moreover provided with a system that can be driven for enabling supply of the OLED source.

The final dimensions of the portable detector device will range between 25 x 15 x 10cm³ and 30 x 20 x 20cm³. The device is supplied by means of an integrated battery.

In what follows indications will be provided concerning the procedures to be adopted for the fabrication of the biochip forming the subject of the present invention.

### The films of transparent conductive material

A film of indium-tin oxide (ITO) or zinc oxide can be deposited using a standard process of sputtering in a high vacuum (from 10⁻⁵ to 10⁻⁶ mbar) on both surfaces 3 and 4 of the substrate 2. The roughness of the coating is preferably less than 1 nm and does not present "spikes" of height higher than 15 nm.

### The optical source

The organic thin films constituting the optical source 7 are deposited by sublimation in a high vacuum with pressures comprised between 10⁻⁶ and 10⁻⁸ mbar and with rate of deposition ranging between 0.1 and 10 Å/s, according to the type of organic material to be sublimated. The thickness of the layers can range between 10 and 150 nm, according to the type of layer deposited.

The thickness of deposition is controlled during growth of the film by means of an appropriately calibrated quartz microbalance. For calibration of the balance the thickness of the film deposited is controlled using profilometric techniques. Said control enables setting of the "tooling factor" of the balance.

The organic films are deposited in succession using Knudsen cells that are different for each type of material. The emitting layer of the OLED used as source can be made up of a matrix (for example, CBP (4.4'-bis-(N-carbazolyl)biphenyl) or TCTA (4.4'.4''-tris(carbazol-9-yl)triphenylamine) doped with an appropriate organic stain. The stain in question can be either of a fluorescent type (for example, DCM2 (4-(dicyanomethylene)-2-methyl-6-(julolidin-4-yl-vinyl)-4H-pyrane)) either of a phosphorescent type (for example, Ir(ppy)₃ ((tris[2-(2-pyridinyl)phenyl-C,N]-iridium) or F(Ir)pic (iridium(III)bis(4,6-(difluorophenyl)-pyridinate-N,C2')picolinate)) and the percentages of light-emitting dye can range between 4% and 15%.

The doped organic layers are deposited by coevaporation, controlling the rate of evaporation of the co-evaporated materials in such a way as to obtain the desired percentages of dopant material.

The deposition of the cathode takes place in a separate vacuum chamber, connected to the chamber for deposition of the organic materials by passage in a vacuum in such a way as to prevent the passage in air of the sample to be made. The cathode can be evaporated at a pressure of 10⁻⁸ mbar or with techniques of evaporation by sublimation or with electron-gun deposition. The cathode can be made, for example, of Li/Al, LiF/Al, Al/Ca and is evaporated through a metal mask with appropriate perforations to obtain the geometries of the paths.

The microcavities within the OLED system can be obtained with two systems:
i) By appropriately varying the thicknesses of the organic materials that make up the OLED and by consequently varying the properties of spectral transmittance of the radiation emitted, in the case in point at an angle 0° with respect to the normal of the device following the method described in B.Y. Jung and C.K. Hwangbo "Determination of an Optimized Alq3 layer thickness in Organic Light Emitting Diodes by using microcavity effects" - Journal of the Korean Physical Society, Vol. 48, N. 6 June 2006 and references cited therein, and in Yokoyama, Science, Vol. 256 (1992) p. 66. In the case where the overall thickness of the organic multilayer necessary for fabrication of this device were to be higher than 150 nm, it will be necessary to use doped organic materials to obtain the charge-carrier layers.
ii) By means of deposition of two or four inorganic layers with an index of refraction that is alternately low (1.4) and high (1.8) on the substrate of the OLED to form a cavity resonant at the peak wavelength of emission of the organic device. The inorganic layers can be deposited by means of vacuum-sputtering techniques and must be deposited between the substrate 2 and the ITO anode 5 (see J. Lim et al. "Enhanced out-coupling factor of microcavity organic light emitting devices with irregular microlens array"-Optics Express 6564, Vol. 14, N. 14, 2006).

In order to increase the signal of emission of the OLED source, it is advisable to govern the latter with a pulsed current.

In the device that will contain the bio-chip, an electronic circuit for the generation of square-waveform pulses with variable frequencies of up to 100 Hz and variable duty-cycle is provided to obtain the necessary light emission.

### Protection system of the optical source

To seal the optical source 7 the procedure is to glue a thin plate of glass on the side of the cathode using an appropriate UV crosslinking resin. The gluing resin must not touch the metal paths of the cathode and an appropriate "design" of the paths and of the underlying ITO must be envisaged. Between the sealing glass, and the OLED device there must be set a "getter" element for capture of any possible atmospheric pollutants (oxygen and humidity) that could infiltrate through the resin.

A second option for sealing the OLED device consists in the deposition of a series of alternating organic and inorganic layers, having a thickness of a few tens of nanometres, directly on the cathode. The deposition of these layers can be obtained by low-power sputtering (in order to prevent any damage to the organic multilayer) in a vacuum chamber.

### The microfluidic system

For the deposition of the microchannels 9 with metal walls, metal masks of appropriate thickness are provided, which have holes corresponding to the design of the walls of the channels. The metal masks must be set in strict contact with the surface of the ITO in order to prevent effects of shading and hence deposition of the metal in regions that must remain transparent. For this purpose, the masks are engaged with electromagnetic systems that will enable engagement and release thereof in a vacuum. The deposition of the metal walls can be obtained either by thermal evaporation in vacuum conditions (10⁻⁶ - 10⁻⁸ mbar) or by means of a process of vacuum sputtering.

As an alternative to this technique, it is possible to envisage a growth of a galvanic type, in which the metal deposition is made in a chemical bath by means of passage of current. In this case, it may be necessary to deposit previously, by evaporation, a metal layer (normally chromium or nickel) to favour adhesion of the subsequent layers.

### Hydrophobic film within the microchannels 9

To provide the hydrophobic film within the microchannels 9 it is advantageously possible to use a process of polymerization mediated by magnetron vacuum sputtering. In particular, there may be advantageously used siloxane-based monomers (Si-O-Si) that are introduced in the gaseous phase within a vacuum chamber. The activation of a low-power RF magnetron activates the polymerization of the monomers by generation of a plasma. The properties of hydrophilicity and hydrophobicity of the polymeric film deposited can be controlled by varying the density of the monomeric gas in the chamber and the RF power density of the magnetron. The characteristics of the plasma generated can be controlled visually on the basis of the colour of the radiation emitted by the plasma in question. The properties of the film obtained are controlled with an angle-of-contact test.

### Organic film within the expansion chambers 10 or micro-channels 9 to improve adhesion of the markers

The organic layer can be deposited by evaporation in vacuum conditions using an appropriate mask provided with holes in the areas of deposition, i.e., in areas corresponding to the expansion chambers 10. The conditions of evaporation are similar to the ones described in relation to the deposition of the organic films constituting the OLED light source.

### Thermal contacts for the cooling system

To obtain thermal contacts for the Peltier cells metal pads 12 are deposited directly on the second film of transparent conductive material 6. For this deposition, the same masks already used to obtain the microfluidic channels are employed. In these masks at least two, preferably three, even more preferably four, square holes are made of the same dimensions as the resting surfaces of the Peltier cells along the perimeter of the surface of the second film of transparent conductive material 6. The deposition takes place according to the same modalities adopted to obtain the microfluidic channels. Prior to deposition of the hydrophobic film, the contact pads are masked in order to prevent coating of these pads with said hydrophobic film, which would rule out the possibility of thermal contact with the cooling system.

Of course, the details of construction and the embodiments may vary widely with respect to what is described and illustrated herein, without thereby departing from the sphere of protection of the present invention, as defined by the annexed claims.

## Claims

1. A biochip (1) for the detection of at least one analyte in a biological sample suitable to be coupled to a detector 'device provided with a cooling system, comprising:
- a transparent substrate (2) provided with a first surface (3) and a second surface (4);
- a first thin film of transparent conductive material (5) positioned on the first surface (3) of the substrate (2);
- a second thin film of transparent conductive material (6) positioned on the second surface (4) of the substrate (2);
- a light source (7) positioned in direct contact with the first thin film of transparent conductive material (5); and
- a microfluidic system (8) positioned in direct contact with the second thin film of transparent conductive material (6) so that the second thin film has at its external perimeter a free surface, where the microfluidic system (8) is constituted by a material with low thermal resistance,
wherein the second thin film of transparent conductive material is pre-arranged for coupling to said cooling system, the second thin film of transparent conductive material (6) having on its free surface at least two metal pads (12), the at least two metal pads (12) being positioned along the external perimeter of the second transparent conductive film (6) for enabling creation of thermal contacts with the cooling system present on the detector device.

2. The biochip (1) according to Claim 1, wherein the light source (7) is constituted by an OLED source.

3. The biochip (1) according to Claim 2, wherein the OLED source (7) is provided inside with vertical microcavities.

4. The biochip (1) according to any one of the preceding claims, wherein the first thin film of transparent conductive material (5) and/or the second thin film of transparent conductive material (6) are/is constituted by indium-tin oxide, zinc oxide, gold, silver or alloys of gold and silver.

5. The biochip (1) according to any one of the preceding claims, wherein the microfluidic system (8) is constituted by a series of microchannels (9).

6. The biochip (1) according to any one of the preceding claims, wherein the microfluidic system (8) is constituted by i) a series of microchannels (9) with comblike configuration or ii) a single microchannel (9) with coiled configuration.

7. The biochip (1) according to Claim 6, wherein the microfluidic system (8) comprises at least one expansion chamber (10), preferably a plurality of expansion chambers (10).

8. The biochip (1) according to Claim 7, wherein the plurality of expansion chambers (10) has a matrix configuration.

9. The biochip (1) according to any one of Claims 7 or 8, wherein at least one expansion chamber (10) is located at the distal end of a microchannel (9) of the comb.

10. The biochip (1) according to any one of the preceding claims, wherein the microfluidic system (8) is constituted by microchannels (9) with metal walls.

11. The biochip according to Claim 5, wherein present within the microchannels (9) is a polymeric hydrophobic film, preferably a siloxane-based polymeric hydrophobic film.

12. The biochip (1) according to Claim 5, wherein present within the microchannels (9) is a hydrophilic film, preferably a siloxane-based hydrophilic film.

13. The biochip (1) according to Claim 7, wherein present in the expansion chambers (10) is an organic film.

14. The biochip (1) according to Claim 7, wherein the at least one expansion chamber (10) is suitable for containing a specific marker for recognition of the analyte.

15. The biochip (1) according to Claim 14, wherein the marker is suitable for emitting a fluorescent or phosphorescent signal.

## Patentansprüche

1. Biochip (1) für die Erfassung wenigstens eines Analyts in einer biologischen Probe, der zur Verbindung mit einer Detektorvorrichtung geeignet ist, die mit einem Kühlsystem versehen ist, wobei er umfasst:
- ein transparentes Substrat (2), das mit einer ersten Fläche (3) und einer zweiten Fläche (4) versehen ist;
- einen ersten Dünnfilm aus transparentem leitendem Material (5), der sich an der ersten Fläche (3) des Substrats (2) befindet;
- einen zweiten Dünnfilm aus transparentem leitendem Material (6), der sich an der zweiten Fläche (4) des Substrats (2) befindet;
- eine Lichtquelle (7), die in direktem Kontakt mit dem ersten Dünnfilm aus transparentem leitendem Material (5) ist; und
- ein Mikrofluidik-System (8), das so in direktem Kontakt mit dem zweiten Dünnfilm aus transparentem leitendem Material (6) ist, dass der zweite Dünnfilm an seinem äußeren Rand eine freie Fläche hat, die nicht in Kontakt mit dem Mikrofluidik-System ist, wobei das Mikrofluidik-System (8) aus einem Material mit niedrigem Wärmewiderstand besteht,
wobei der zweite Dünnfilm aus transparentem leitendem Material zur Verbindung mit dem Kühlsystem vorbestimmt ist, der zweite Dünnfilm aus transparentem leitendem Material (6) an seiner freien Fläche wenigstens zwei Kontaktflächen (12) aus Metall aufweist und sich die wenigstens zwei Kontaktflächen (12) aus Metall an dem äußeren Rand des zweiten transparenten leitenden Films (6) befinden, um die Schaffung thermischer Kontakte mit dem an der Detektorvorrichtung vorhandenen Kühlsystem zu ermöglichen.

2. Biochip (1) nach Anspruch 1, wobei die Lichtquelle (7) durch eine OLED-Quelle gebildet wird.

3. Biochip (1) nach Anspruch 2, wobei die OLED-Quelle (7) im Inneren mit vertikalen Mikrokavitäten versehen ist.

4. Biochip (1) nach einem der vorangehenden Ansprüche, wobei der erste Dünnfilm aus transparentem leitendem Material (5) und/oder der zweite Dünnfilm aus transparentem leitendem Material (6) aus Indium-Zinnoxid, Zinkoxid, Gold, Silber oder Legierungen von Gold und Silber bestehen/besteht.

5. Biochip (1) nach einem der vorangehenden Ansprüche, wobei das Mikrofluidik-System (8) aus einer Reihe von Mikrokanälen (9) besteht.

6. Biochip (1) nach einem der vorangehenden Ansprüche, wobei das Mikrofluidik-System (8) aus a) einer Reihe von Mikrokanälen (9) mit kammartigem Aufbau oder b) einem einzelnen Mikrokanal (9) mit gewendeltem Aufbau besteht.

7. Biochip (1) nach Anspruch 6, wobei das Mikrofluidik-System (8) wenigstens eine Expansionskammer (10), vorzugsweise eine Vielzahl von Expansionskammern (10), umfasst.

8. Biochip (1) nach Anspruch 7, wobei die Vielzahl von Expansionskammern (10) eine Matrixaufbau aufweisen.

9. Biochip (1) nach einem der Ansprüche 7 oder 8, wobei sich wenigstens eine Expansionskammer (10) an dem vorderen Ende eines Mikrokanals (9) des Kamms befindet.

10. Biochip (1) nach einem der vorangehenden Ansprüche, wobei das Mikrofluidik-System (8) durch Mikrokanäle (9) mit Wänden aus Metall gebildet wird.

11. Biochip (1) nach Anspruch 5, wobei in den Mikrokanälen (9) ein hydrophober Polymer-Film, vorzugsweise ein hydrophober Polymer-Film auf Siloxan-Basis, vorhanden ist.

12. Biochip (1) nach Anspruch 5, wobei in den Mikrokanälen (9) ein hydrophiler Film, vorzugsweise ein hydrophiler Film auf Siloxan-Basis, vorhanden ist.

13. Biochip (1) nach Anspruch 7, wobei in den Expansionskammern (10) ein organischer Film vorhanden ist.

14. Biochip (1) nach Anspruch 7, wobei die wenigstens eine Expansionskammer (10) zum Aufnehmen eines spezifischen Markers zur Erkennung des Analyts geeignet ist.

15. Biochip (1) nach Anspruch 14, wobei der Marker zum Emittieren eines Fluoreszenz- oder Phosphoreszenz-Signals geeignet ist.

## Revendications

1. Biopuce (1) permettant la détection d'au moins un analyte dans un échantillon biologique adaptée pour être couplée à un dispositif de détection pourvu d'un système de refroidissement, comprenant :
un substrat transparent (2) pourvu d'une première surface (3) et d'une deuxième surface (4) ;
un premier film mince en matériau conducteur transparent (5) positionné sur la première surface (3) du substrat (2) ;
un deuxième film mince en matériau conducteur transparent (6) positionné sur la deuxième surface (4) du substrat (2) ;
une source de lumière (7) positionnée en contact direct avec le premier film mince en matériau conducteur transparent (5) ; et
un système microfluidique (8) positionné en contact direct avec le deuxième film mince en matériau conducteur transparent (6) de sorte que le deuxième film mince ait au niveau de son périmètre externe une surface libre où le système microfluidique (8) est constitué d'un matériau à faible résistance thermique,
dans laquelle le deuxième film mince en matériau conducteur transparent est pré-agencé pour être couplé audit système de refroidissement, le deuxième film mince en matériau conducteur transparent (6) ayant sur sa surface libre au moins deux tampons métalliques (12), les au moins deux tampons métalliques (12) étant positionnés le long du périmètre externe du deuxième film conducteur transparent (6) pour permettre la création de contacts thermiques avec le système de refroidissement présent sur le dispositif de détection.

2. Biopuce (1) selon la revendication 1, dans laquelle la source de lumière (7) est constituée d'une source OLED.

3. Biopuce (1) selon la revendication 2, dans laquelle la source OLED (7) est pourvue de microcavités verticales à l'intérieur.

4. Biopuce (1) selon l'une quelconque des revendications précédentes, dans laquelle le premier film mince en matériau conducteur transparent (5) et/ou le deuxième film mince en matériau conducteur transparent (6) sont/est constitué(s) d'oxyde d'indium-étain, d'oxyde de zinc, d'or, d'argent ou d'alliages d'or et d'argent.

5. Biopuce (1) selon l'une quelconque des revendications précédentes, dans laquelle le système microfluidique (8) est constitué d'une série de microcanaux (9).

6. Biopuce (1) selon l'une quelconque des revendications précédentes, dans laquelle le système microfluidique (8) est constitué i) d'une série de microcanaux (9) ayant une configuration en peigne ou ii) d'un seul microcanal (9) avec une configuration en spirale.

7. Biopuce (1) selon la revendication 6, dans laquelle le système microfluidique (8) comprend au moins une chambre d'expansion (10), de préférence une pluralité de chambres d'expansion (10).

8. Biopuce (1) selon la revendication 7, dans laquelle la pluralité de chambres d'expansion (10) possède une configuration matricielle.

9. Biopuce (1) selon l'une quelconque des revendications 7 ou 8, dans laquelle au moins une chambre d'expansion (10) est située au niveau de l'extrémité distale d'un microcanal (9) du peigne.

10. Biopuce (1) selon l'une quelconque des revendications précédentes, dans laquelle le système microfluidique (8) est constitué de microcanaux (9) avec des parois métalliques.

11. Biopuce selon la revendication 5, dans laquelle un film polymère hydrophobe, de préférence un film polymère hydrophobe à base de siloxane est présent à l'intérieur des microcanaux (9).

12. Biopuce (1) selon la revendication 5, dans laquelle un film hydrophile, de préférence un film hydrophile à base de siloxane est présent à l'intérieur des microcanaux (9).

13. Biopuce (1) selon la revendication 7, dans laquelle un film organique est présent dans les chambres d'expansion (10).

14. Biopuce (1) selon la revendication 7, dans laquelle l'au moins une chambre d'expansion (10) est adaptée pour renfermer un marqueur spécifique permettant la reconnaissance de l'analyte.

15. Biopuce (1) selon la revendication 14, dans laquelle le marqueur est adapté pour émettre un signal fluorescent ou phosphorescent.
